# EUROPÄISCHE PATENTSCHRIFT

(11) **EP 0 707 279 B1**
(45) Veröffentlichungstag und Bekanntmachung des Hinweises auf die Patenterteilung: **28.02.2001**
(21) Anmeldenummer: 95115846.8
(22) Anmeldetag: 09.10.1995
(51) Int. Cl.: G06K 9/62

(54) **Mustererkennungsverfahren mit Kalibrierung der Lernfähigkeit**
Pattern recognition method using adaptibility calibration
Méthode de reconnaissance de formes avec calibrage de l'adaptabilité

(30) Priorität: 12.10.1994 DE 4436408
(43) Veröffentlichungstag der Anmeldung: 17.04.1996
(73) Patentinhaber: SIEMENS AKTIENGESELLSCHAFT, 80333 München (DE)
(72) Erfinder: Oberländer, Matthias, D-89077 Ulm (DE)

(56) Entgegenhaltungen:
- IEEE TRANS. ON ELECTRONIC COMPUTERS, Bd. ec-16, Nr. 3, Juni 1967, Seiten 308-319, XP002029561 D. F. SPECHT: "Generation of polynomial discriminant functions for pattern recognition"

## Beschreibung

Die Erfindung betrifft ein Mustererkennungsverfahren nach dem Oberbegriff des Patentanspruchs 1.

Mustererkennungsverfahren sind insbesondere von Bedeutung in der Automatisierungstechnik und der maschinellen Textverarbeitung, beispielsweise in Schriftenlesern der automatischen Briefverteilung oder der Auswertung von Formularen. Dabei wird ausgegangen von einem begrenzten Satz von Kennungen, beispielsweise dem alphanumerischen Zeichensatz in verschiedenen Schreibweisen zuzüglich von Sonderzeichen, und das Ziel des Erkennungsverfahrens ist es, mit möglichst hoher Zuverlässigkeit ein zu erkennendes Objekt einer Kennung zuzuordnen.

Hierfür werden nach eingehender Vorverarbeitung der Objektdaten in einer Schätzerstufe eines Klassifikators für das zu erkennende Objekt zu einer oder mehreren in Frage kommenden Kennungen numerische Bewertungen geschätzt, die in einer nachfolgenden Entscheiderstufe als Grundlage für die Entscheidung über die Zuordnung des Objekts zu einer Kennung herangezogen werden.

Die Zuordnungsentscheidungen sind mit Restfehlern behaftet, die sich durch Rückweisungen und durch Akzeptieren von unzutreffenden Kennungen (Substitutionen) ergeben. Der Wunsch nach geringer Rückweisungsquote und gleichzeitig geringer Substitutionsquote bedeutet gegenläufige Anforderungen an den automatisierten Entscheidungsprozeß.

Aus der DE 41 33 590 A1 ist ein Verfahren zur Klassifikation von Amplitudenwerte darstellenden Signalen bekannt, bei welchem Merkmale aus den Signalen extrahiert und daraus Auftrittswahrscheinlichkeiten abgeleitet werden. Aus der Gesamtheit der abgeleiteten Auftrittswahrscheinlichkeiten wird eine Entscheidungsgröße berechnet und mit einem Schwellwert verglichen.

In IEEE Trans. on Electr. Comp., Vol. EC-16, No. 3, June 1967, S. 308-319 ist ein Verfahren zur Gewinnung von Parametern einer Polynom-Funktion für einen Klassifikator bekannt, bei welchem für jede bei der Klassifikation mögliche Kategorie eine Wahrscheinlichkeitsdichtefunktion so geschätzt wird, daß nach einer sogenannten Bayes-Entscheidungsregel klassifiziert werden kann.

In IEEE Trans. on Autom. Control, Vol. AC-11, No. 1, Jan. 1966, S. 6-19 sind lernfähige Systeme für automatische Steuerungen mit Rückkopplungsschleifen zu einem Klassifikator beschrieben. Dabei wird besonders auf Probleme der Entscheidungstheorie und der stochastischen Approximation eingegangen. Die Vorteile trainierbar adaptiver Schwellwertsetzung werden betont.

Aufgabe der vorliegenden Erfindung ist es, ein Mustererkennungsverfahren anzugeben, welches eine Vereinfachung der Optimierung des Entscheidungsprozesses ermöglicht. Für den Fall mehrerer Bewertungen zu konkurrierenden Kennungen soll die Zuverlässigkeit der Entscheidung verbessert werden.

Die Erfindung ist im Patentanspruch 1 beschrieben. Die Unteransprüche enthalten vorteilhafte Ausgestaltungen und Weiterbildungen der Erfindung.

Für eine gemäß der Erfindung kalibrierte Bewertung der Kennungen ergibt sich vorteilhafterweise die Möglichkeit, unabhängig von der Häufigkeitsverteilung des Auftretens von Objekten zu den einzelnen Kennungen durch Vorgabe von Gewicht;faktoren für Rückweisungen und Substitutionen eine Einstellung der Entscheiderstufe für ein optimales Verhältnis von Rückweisungen und Substitutionen vorzunehmen. Insbesondere kann hierzu in der Entscheiderstufe eine kennungsunabhängige einstellbare Entscheidungsschwelle vorgegeben werden.

Vorzugsweise erfolgt die Kalibrierung kennungsspezifisch und für den Fall der gleichzeitigen Schätzung von Bewertungen zu konkurrierenden Kennungen unter Berücksichtigung von Kombinationen von Kennungen.

Die Erfindung ist besonders vorteilhaft in einem Schriftenleser, beispielsweise einem Anschriftenleser bei der Postautomation oder einem Formularleser im Bankverkehr, einsetzbar.

Die Erfindung ist nachfolgend anhand von Ausführungsbeispielen unter Bezugnahme auf die Abbildungen noch eingehend veranschaulicht.

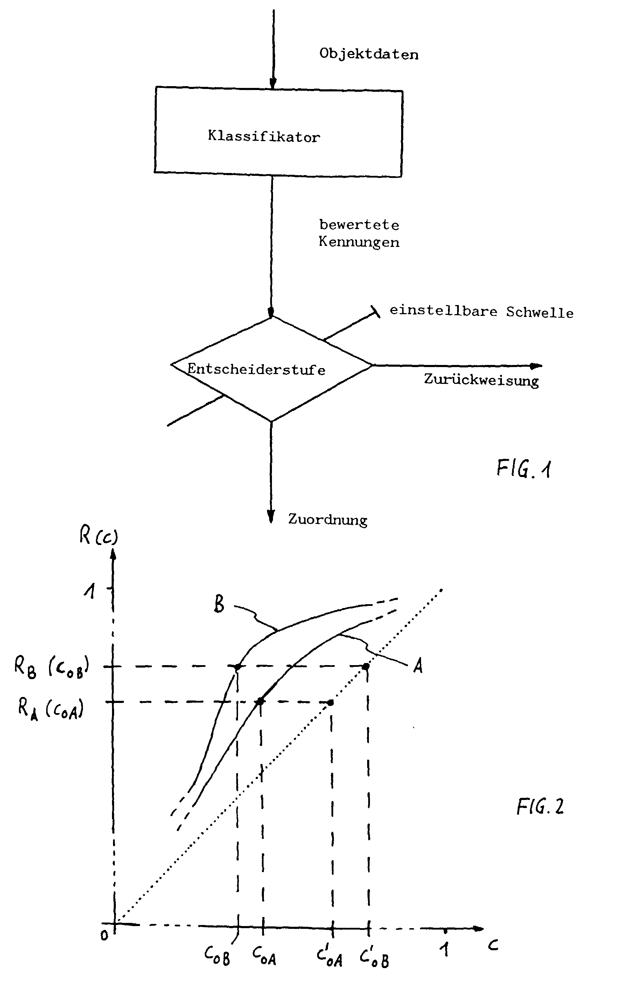

In FIG. 1 ist ein einfaches Modell eines Erkennungssystems skizziert. Dieses besteht im wesentlichen aus einem Klassifikator und einem Entscheider. Die Signalverarbeitung erfolgt digital. Dem Klassifikator werden Daten eines zu erkennenden Objekts, beispielsweise in Form eines binären Punktrasters zugeführt. Einzelheiten der Signalverarbeitung und einer eventuellen Vorverarbeitung, z.B. Separation aufeinanderfolgender Zeichen bei einem Schriftenleser, sind aus dem Stand der Technik in vielfältiger Form bekannt.

Der Klassifikator prüft die Objektdaten auf Vereinbarkeit mit den verschiedenen Kennungen eines im System vorgesehenen Kennungssatzes und schätzt zu einer oder mehreren in Frage kommenden Kennungen einen numerischen Wert c innerhalb einer Bewertungsskala, beispielsweise 0 < c \ 1 in Schritten von 0,05. Als Kennungen des Kennungssatzes seien als ein einfaches Beispiel alle alphanumerischen Zeichen vorgesehen. Die Bewertungen können als numerisch quantifizierte Schätzungen der Glaubwürdigkeit einer Hypothese, z.B. "Bei dem Objekt handelt es sich um einen Buchstaben A ! ", anschaulich interpretiert werden. Derartige Bewertungsverfahren sind ebenfalls hinreichend aus dem Stand der Technik bekannt.

In einer Trainingsphase werden dem Klassifikator Objektdaten einer Vielzahl bekannter Objekte zugeführt. Die von dem Klassifikator in einer solchen Trainingsphase abgegebenen Bewertungen werden in der Weise erfaßt und durch Vergleich mit den für die bekannten Trainingsobjekte zutreffenden Kennungen ausgewertet, daß für jedes Inkrement der Bewertungsskala (oder zumindest eines relevanten Teils derselben) alle der mit diesem Inkrement bewerteten Ereignisse erfaßt und der relative Anteil R (c) der hiervon zutreffenden Kennungen ermittelt wird.

Die Anzahl von Trainingsobjekten in der Trainingsphase ist so hoch gewählt, daß die verschiedenen Kennungen des Kennungssatzes im Regelfall in allen Inkrementen der Bewertungsskala mehrfach auftreten.

Für jedes Inkrement der Bewertungsskala getrennt wird die Anzahl der in dieses Bewertungsinkrement fallenden Bewertungsvorgänge ermittelt. Ebenfalls separat für jedes Bewertungsinkrement wird aus der Gesamtzahl der darin gezählten Bewertungsvorgänge der Anteil R (c) der richtigen Kennungen, d.h. derjenigen Vorgänge, bei welchen die bewertete Kennung mit der bekannten tatsächlichen Kennung des zu erkennenden Objekts übereinstimmt, bestimmt. Im Idealfall ist dieser Anteil gleich dem Wert c des betreffenden Bewertungsinkrements. Im Realfall wird der für ein Bewertungsinkrement c bestimmte Anteil R (c) der richtigen Kennungen von dem Wert des Bewertungsinkrement mehr oder weniger abweichen, was bedeutet, daß der Klassifikator bei der Schätzung zu optimistisch (R (c) < c) oder zu pesimistisch (R (c) > c) bewertet. In dieser Weise wird in der Trainingsphase für jedes Bewertungsinkrement der Bewertungsskala ein Anteil R (c) richtiger Kennungen innerhalb des jeweiligen Inkrements bestimmt.

Es ergibt sich eine Zuordnung eines Anteils R (c) zu jedem Bewertungsinkrement c, welche als Kalibrierung der durch die Bewertung c geschätzten Glaubwürdigkeit auf eine ermittelte tatsächliche Zuverlässigkeit betrachtet werden kann.

Die in der Trainingsphase bestimmte Zuordnung von R (c) zu c wird als Kalibriervorschrift gespeichert. Im Erkennungsbetrieb werden dann die für unbekannte zu erkennende Objekte vom Klassifikator geschätzten Bewertungen c in einer Kalibrierstufe nach Maßgabe der gespeicherten Zuordnungsvorschrift durch die in der Trainingsphase ermittelten Anteile R (c) als kalibrierte Bewertungen ersetzt. Einer Kennungszuordnung in einer nachfolgenden Entscheiderstufe werden diese kalibrierten Bewertungen zugrunde gelegt.

Sofern nur ein Teil der Bewertungsskala interessant ist, z.B. durch eine Konzentration der bewerteten Kennungen im oberen Bereich der Bewertungsskala aufgrund einer Vorselektion in vorausgegangenen Verarbeitungsschritten, kann dieser Vorgang auf den interessanten Abschnitt der Skala beschränkt werden.

Für die Einstellung der Entscheidungsschwelle einer Entscheiderstufe kann sowohl für eine Zurückweisung als auch für eine Substitution je ein Kostengewichtsfaktor angesetzt werden, welche abhängig vom jeweiligen Einsatzfall sind.

Es zeigt sich, daß die derart kalibrierten Bewertungen bei einer festgelegten Kosten-Gewichtung von Substitutionen und Rückweisungen ohne weitere Kenntnisse, insbesondere ohne Kenntnis der Auftretenshäufigkeit der einzelnen Bewertungen eine kostenoptimale Einstellung der Entscheiderschwelle ermöglicht.

Die erfindungsgemäße Kalibrierung von Bewertungen ist in einer Ausführungsform mit kennungsspezifischer Kalibrierung besonders vorteilhaft zur Verringerung der Fehlerrate eines Erkennungssystems, welches die Möglichkeit einer gleichzeitigen Bewertung konkurrierender Kennungen für ein zu erkennendes Objekt vorsieht. Dabei wird die Erkenntnis genutzt, daß die kennungsspezifischen Zuordnungsvorschriften für verschiedenen Kennungen unterschiedliche Verläufe über der Bewertungsskala aufweisen und eine kennungsspezifische Kalibrierung eine Vertauschung der Rangfolge konkurrierender Kennungen und eine Verringerung der Fehlerrate bewirken kann. Vorzugsweise wird bei der kennungsspezifischen Kalibrierung die Kombination konkurrierender Kennungen berücksichtigt, wobei eine Beschränkung auf statistisch häufige Kombinationen zulässig ist. Ein Beispiel hierfür ist nachfolgend im Detail beschrieben.

Für zwei konkurrierende Kennungen A und B werden in einer Trainingsphase jeweils kennungsspezifische Kalibrierungen durchgeführt, indem in der beschriebenen Weise für jedes Bewertungsinkrement der Bewertungsskala alle Bewertungsvorgänge zu Kennungen A bzw. B sowie die dazu feststellbaren Anteile richtiger Kennungen ermittelt und als zwei Zuordnungsvorschriften R_{A}(c) bzw. R_{B}(c) gespeichert werden. Die gespeicherten Zuordnungsvorschriften sind in FIG. 2 als zwei Funktionskurven in einem R-c-Diagramm skizziert. Die Kurven haben im Regelfall für verschiedene Kennungen verschiedene Verläufe. Punktiert ist die Referenzlinie R(c) = c eingetragen. Im skizzierten Beispiel ist die Klassifikatorschätzung sowohl für A auch für B zu pessimistisch. Für ein konkretes zu erkennendes Objekt im Erkennungsbetrieb seien vom Klassifikator eine Bewertung c_{oA} zur Kennung A und eine niedrigere Bewertung c_{oB} zur Kennung B abgegeben worden. Aus der gespeicherten Kalibriervorschrift ist bekannt, daß die mit c_{oA} bewerteten Kennungen A in der Trainingsphase einen richtigen Anteil R_{A} (c_{oA}) und die mit c_{oB} bewerteten Kennungen einen richtigen Anteil R_{B} (c_{oB}) aufweisen. Erfindungsgemäß werden die vom Klassifikator geschätzten Bewertungen c_{oA} und c_{oB} durch die aus dem gespeicherten Kalibriervorschriften entnommen Werte für R_{A} (c_{oA}) bzw. R_{B} (co_{B} ) als neue kalibrierte Bewertung c'_{oA} bzw. c'_{oB} ersetzt. In dem skizzierten Beispielsfall, in dem von c_{oA} > c_{oB} ausgegangen wurde, wird durch die Kalibrierung die Bewertungsrangfolge mit c'_{oA} < c'_{oB} umgekehrt.

Für die in FIG. 2 skizzierten Kalibrierkurven kann auch die Kombination konkurrierender Kennungen mit berücksichtigt werden, indem für die Erstellung der Kalibriervorschriften in der Trainingsphase nur die Fälle berücksichtigt werden, in denen die Kennungen A und B gleichzeitig bewertet werden. Diese Kombinationsauswertung kann auf die besonders häufig auftretetenden Kennungskombinationen beschränkt werden.

Für den Fall gleichzeitiger Bewertung von konkurrierenden Kennungen zu demselben Objekt wird vorzugsweise nur die nach der Kalibrierung am höchsten bewertete Kennung in der Entscheiderstufe dem Schwellwertvergleich unterzogen.

## Patentansprüche

1. Mustererkennungsverfahren, bei welchem für ein zu erkennendes Objekt zu einer oder mehreren Kennungen aus einem vorgegebenen Kennungssatz je eine numerische diskrete Bewertung innerhalb einer Bewertungsskala geschätzt wird, und bei welchem in einer Entscheiderstufe auf der Grundlage dieser Bewertungen eine Entscheidung über die Zuordnung des zu erkennenden Objekts zu einer Kennung getroffen wird, dadurch gekennzeichnet, daß in einer Trainingsphase anhand eines bekannten Objektsatzes eine Kalibrierung der Bewertungen in der Weise stattfindet, daß zu jedem Inkrement c der Bewertungsskala der relative Anteilsfaktor R (c) der zutreffenden Kennungen innerhalb aller in dieses Bewertungsinkrement fallenden Bewertungsvorgänge ermittelt wird, und daß im Erkennungsbetrieb jeweils die geschätzte Bewertung c durch den in der Trainingsphase dazu ermittelten Anteilsfaktor R (c) ersetzt wird.

2. Verfahren nach Anspruch 1, dadurch gekennzeichnet, daß die Kalibrierung kennungsspezifisch erfolgt.

3. Verfahren nach Anspruch 2, dadurch gekennzeichnet, daß bei der Kalibrierung Kombinationen konkurrierender Kennungen berücksichtigt werden.

4. Verfahren nach einem der Ansprüche 1 bis 3, dadurch gekennzeichnet, daß in der Entscheiderstufe eine Entscheidung über eine Zuordnung anhand eines kennungsunabhängigen einstellbaren Schwellwerts getroffen wird.

5. Verfahren nach einem der Ansprüche 1 bis 4, gekennzeichnet durch die Anwendung in Schriftenlesern.

## Claims

1. Pattern recognition method in the case of which, for an object which is to be recognized, one discrete evaluation is estimated in each case within an evaluation scale in relation to one or more identifiers from a prescribed set of identifiers, and in the case of which, on the basis of these evaluations, a decision is made in a decision stage on the assignment to an identifier of the object to be recognized, characterized in that in a training phase a known set of objects is used to calibrate the evaluations in such a way that the relative proportional factor R (c) of the relevant identifiers is determined in relation to each increment c of the evaluation scale within all evaluation operations falling into this evaluation increment, and in that in each case the estimated evaluation c is replaced in the operation of recognition by the proportional factor R (c) determined in the training phase relating thereto.

2. Method according to Claim 1, characterized in that the calibration is performed in an identifier-specific fashion.

3. Method according to Claim 2, characterized in that combinations of competing identifiers are taken into account in the calibration.

4. Method according to one of Claims 1 to 3, characterized in that a decision on an assignment is made in the decision stage with the aid of a threshold value which can be set as a function of identifier.

5. Method according to one of Claims 1 to 4, characterized by use in document readers.

## Revendications

1. Procédé de reconnaissance de formes au cours duquel, pour un objet, que l'on veut reconnaître comme un ou plusieurs signes tirés d'un jeu de signes donnés, on estime dans chaque cas une évaluation numérique discrète à l'intérieur d'une échelle d'évaluation et au cours duquel on prend, dans un étage de décision et sur la base de ces évaluations, une décision en ce qui concerne la correspondance de l'objet à reconnaître avec un signe **caractérisé par le fait** que, au cours d'une phase d'entraînement, on procède, à l'aide d'un jeu d'objets connus, à un calibrage des évaluations de la sorte que, pour chaque incrément c de l'échelle d'évaluation, on détermine la quote-part relative R (c) des signes correspondants dans le cadre de tous les processus d'évaluation qui tombent dans cet incrément d'évaluation et par le fait que, au cours du travail de reconnaissance, on remplace, dans chaque cas, l'évaluation c estimée par la quote-part R (c) déterminée à cet effet pendant la phase d'entraînement.

2. Procédé selon la revendication 1 caractérisé par le fait que le calibrage est fait d'une façon spécifique aux signes.

3. Procédé selon la revendication 2 caractérisé par le fait que, lors du calibrage, on tient compte de combinaisons de signes concurrents.

4. Procédé selon l'une des revendications 1 à 3 caractérisé par le fait que, dans l'étage de décision, une décision concernant une concordance est prise à l'aide d'une valeur seuil réglable indépendante du signe.

5. Procédé selon l'une des revendications 1 à 4 caractérisé par son application dans les lecteurs de caractères.
